**Europäisches Patentamt**

**European Patent Office**

**Office européen des brevets**

(19)

(11) Veröffentlichungsnummer: **0 234 426**
**B1**

# EUROPÄISCHE PATENTSCHRIFT

(45) Veröffentlichungstag der Patentschrift:
05.09.90

(21) Anmeldenummer: **87101978.2**

(22) Anmeldetag: **12.02.87**

(51) Int. Cl.⁵: **C08F 36/18**

(54) **Chloropren-Polymerisation.**

(30) Priorität: **19.02.86 DE 3605332**

(43) Veröffentlichungstag der Anmeldung:
**02.09.87 Patentblatt 87/36**

(45) Bekanntmachung des Hinweises auf die Patenterteilung:
**05.09.90 Patentblatt 90/36**

(84) Benannte Vertragsstaaten:
**DE FR GB**

(56) Entgegenhaltungen:
**EP-A- 0 034 747**
**FR-A- 1 338 716**

(73) Patentinhaber: **BAYER AG,
D-5090 Leverkusen 1 Bayerwerk(DE)**

(72) Erfinder: **Casper, Rudolf, Prof. Dr., St. Ingberter
Strasse 3, D-5090 Leverkusen(DE)**
Erfinder: **Wendling, Peter, Franz Marc-Strasse 9,
D-5090 Leverkusen(DE)**
Erfinder: **Konter, Wolfgang, Dr., Espenstrasse 49,
D-4040 Neuss 21(DE)**
Erfinder: **Hohmann, Gerhard, Dr., An der Steinrütsch 35,
D-5090 Leverkusen(DE)**

**Beschreibung**

Die Erfindung betrifft ein Verfahren zur Herstellung von lagerstabilen Chloroprenpolymerisaten mit Hilfe eines Polymerisationsinitiators, enthaltend oder bestehend aus Natriumdithionit, wobei man einen Teil des Initiators bei Polymerisationsbeginn zusetzt und den übrigen Teil in einem oder mehreren Anteilen während der Polymerisation eindosiert.

Es ist üblich, 2-Chlorbutadien (= Chloropren) durch Zusatz von Stabilisatoren, wie Phenothiazin, gegen unkontrollierte und vorzeitige Polymerisation zu schützen und diese Stabilisatoren während der Polymerisation im Monomeren zu belassen, weil dadurch die Notwendigkeit entfällt, das unstabilisierte Chloropren tiefgekühlt aufzubewahren und streng vor Luftzutritt zu schützen.

Dem Fachmann ist nun bekannt, daß die radikalisch initiierte Emulsionspolymerisation von Chloropren in Anwesenheit von Stabilisatoren und/oder Sauerstoffspuren entweder gar nicht oder nur sehr verzögert gestartet werden kann.

Zudem haben bereits relativ geringe, technisch unvermeidbare Schwankungen des Stabilisatorgehaltes im Monomeren relativ große Schwankungen des Starts und einen ungleichmäßigen Verlauf der Polymerisation und damit eine Verschlechterung der Produktqualität zur Folge.

In der DE-A 3 006 802 wird ein Verfahren zur Polymerisation von Chloropren mit Initiatorsystemen auf Basis Natriumdithionit beschrieben. Bei diesem Verfahren kann jedoch gerade bei kontinuierlicher Polymerisationsweise kein willkürliches Monomerumwandlungsverhältnis in den einzelnen Kesseln eingestellt werden, da der Katalysator in einem einzigen Anteil zu Reaktionsbeginn zugesetzt wird.

Durch die Wahl des Initiator-Verhältnisses Peroxid/Dithionit ist außerdem ein vollständiger Verbrauch des Peroxidinitiators nicht zwingend gewährleistet. Wie dem Fachmann bekannt ist, beeinflussen aber gerade solche überschüssigen Peroxidmengen die Produkteigenschaften des fertigen Polymers negativ.

Aus der FR-A 1 338 716 ist ein Verfahren zur Herstellung von Polychloropren durch Emulsionspolymerisation in Gegenwart eines Initiatorsystems aus organischem Hydroperoxid, wasserlöslichem Persulfat, Dithionit und gegebenenfalls Natrium-anthrachinon-$\beta$-sulfonat bekannt.

Nach einer bevorzugten Ausführungsform werden 50–90% des Dithionits vor und der Rest während der Polymerisation zugegeben. Daß ab einem bestimmten Umsatz nur noch Dithionit zugegeben werden sollte, kann der FR-A 1 338 716 nicht entnommen werden. Durch diese erfindungsgemäße Maßnahme erhält man eine verbesserte Lagerstabilität.

Der Erfindung liegt daher die Aufgabe zugrunde, ein Verfahren zur Polymerisation von Chloropren aufzufinden, das es ermöglicht, reproduzierbar lagerstabiles Polychloropren herzustellen.

Gegenstand der Erfindung ist daher ein Verfahren zur Polymerisation von Chloroprenpolymerisaten durch wäßrige Emulsionspolymerisation von mit Phenothiazinverbindungen stabilisiertem Chloropren oder einem Gemisch aus Chloropren und bis zu 20 Gew.-% eines oder mehrerer mit Chloropren copolymerisierbarer Monomere unter Verwendung a) eines Polymerisationsinitiators, bestehend aus einer Mischung von Natriumdithionit mit Formamidinsulfinsäure oder mit Kaliumperoxodisulfat oder mit Formamidinsulfinsäure und Kaliumperoxodisulfat oder mit Kaliumperoxodisulfat und Natriumanthrachinon-$\beta$-sulfonat oder mit Formamidinsulfinsäure und Kaliumperoxodisulfat und Natriumanthrachinon-$\beta$-sulfonat in Gegenwart von Sauerstoff und b) eines Reglers, dadurch gekennzeichnet, daß die Reglermenge 0,3 bis 5 mMol je 100 g Monomer beträgt und daß zu Polymerisationsbeginn 30 bis 90% der Initiatoren vorliegen und der Rest während der Polymerisation portionsweise zugegeben wird, wobei bei einem Umsatz > 60% nur noch Natriumdithionit zugesetzt wird.

Bezogen auf die zu polymerisierenden Monomeren werden 0,01 bis 0,3, bevorzugt 0,01 bis 0,15 Gew.% Natriumdithionit eingesetzt.

Werden Initiatormischungen eingesetzt, die neben Natriumdithionit auch Kaliumperoxodisulfonat enthalten, so liegt das Molverhältnis des Dithionits zum Persulfat bei 1–3:1, bevorzugt bei 1–2:1.

Initiatoren aus Natriumdithionit und Kaliumperoxodisulfat sind bevorzugt.

Das Gewichtsverhältnis von FAS/Kaliumperoxodisulfat und Anthrachinon-$\beta$-sulfonsaurem Natrium kann im Rahmen der Angaben in der DE-A 2 650 342 variiert werden.

Als Emulgatoren können die bekannten anionischen, kationischen, nichtionischen und amphoteren oberflächenaktiven Verbindungen eingesetzt werden. Die Emulgatoren werden für sich allein oder kombiniert in solchen Mengen eingesetzt, die eine oberflächenaktive Wirkung gewährleisten. Die Mengen schwanken je nach Art der verwendeten Verbindungen und dem pH-Bereich größenordnungsgemäß zwischen 2 und 6 Gew.-%., bezogen auf die eingesetzte Monomermenge. Die Polymerisation wird bei 0 bis 70°C durchgeführt, wobei 0–55°C bevorzugt sind.

Die Monomeren werden üblicherweise je nach vorgesehener Anwendung des Polymeren zu 63 bis 99% umgesetzt, wobei für Festkautschuke zur Erzielung vorteilhafter anwendungstechnischer Werte Umsätze zwischen 63 und 70% angemessen sind, während Latices, die zur Papierverfestigung oder zur Bitumenvergütung benötigt werden, mit einem hohen Umsatz bis zu 99%, vorzugsweise 85 bis 99%, hergestellt werden.

Geeignete Comonomere sind z.B. Acrylnitril, Methacrylnitril, Acrylsäureester, Methacrylsäureester, Vinylidenchlorid, Styrol, Vinyltoluole, Butadien-(1,3), 1-Chlorbutadien-(1,3), 2,3-Dichlorbutadien-(1,3), 2-Chlor-3-Methylbutadien-(1,3) und Schwefel, wobei Schwefel und 2,3-Dichlorbutadien-(1,3) bevorzugt sind.

Durch Zugabe bekannter, als Regler wirksamer Verbindungen, z.B. Mercaptane, können die Struktur und die Eigenschaften der Polymeren in weiten Grenzen variiert werden.

Die Reglermenge liegt vorzugsweise bei 0,3 bis 5 mmol je 100 g Monomer.

Bevorzugte Kettenübertragungsmittel sind aliphatische Mercaptane, insbesondere solche mit 8 bis 18 Kohlenstoffatomen. Die Mercaptane können geradekettig oder verzweigt sein. So können primäre, sekundäre und tertiäre Mercaptane verwendet werden, das bevorzugteste Mercaptan ist jedoch n-Dodecylmercaptan. Auch andere bekannte Kettenübertragungsmittel, beispielsweise aromatische Disulfide oder Xanthogendisulfide, insbesondere Xanthogendisulfide, wie sie in EP-A 53 319 beschrieben sind, können verwendet werden. Ein bevorzugtes Xanthogendisulfid ist Bis-(5-ethyl-1,3-dioxan-5-ylmethyl)-xanthogendisulfid.

Nicht umgesetzte organische Verbindungen lassen sich nach der Reaktion durch Wasserdampfdestillation, beispielsweise bei 50°C und einem absoluten Druck von 26,7 mbar entfernen.

Die in den folgenden Beispielen beschriebenen Polymerisationsversuche wurden zur Erzielung besonders definierter Reaktionsbedingungen in einer kontinuierlich betriebenen 6 Kessel-Kaskade betrieben.

Diese kontinuierliche Polymerisation von Chloropren ist aus den US-Patentschriften 2 384 277, 2 394 291 und 2 831 842 bekannt.

Das Monomere inclusive Stabilisator und Regler wurde in der Emulgator und Ätznatron enthaltenden wäßrigen Phase voremulgiert und gelangte dann in das Reaktionsgefäß, in das zusätzlich der Initiator eindosiert wurde. Analoge Ergebnisse der Polymerisation wurden auch dann erhalten, wenn ohne Voremulgierung gearbeitet wurde.

Nach dem Austritt aus der Rührkesselkaskade wurde die Reaktion durch Zugabe bekannter Abstoppmittel wie t-Butylbrenzcatechin bzw. Diethylhydroxylamin und gleichzeitigem Entzug des Monomeren abgebrochen. Der pH-Wert des alkalischen Latex wurde durch verdünnte Essigsäure auf pH 6,5 gesenkt und das Polymere aus dieser Emulsion durch Gefrierkoagulation isoliert und getrocknet (Chem. Engng. Progr. 43, 391 (1974), DE-PS 1 051 506).

1. Vergleichsbeispiel

In den ersten Reaktor einer Polymerisationskaskade, bestehend aus 6 gleichen Reaktoren mit einem Volumen von je 50 Liter wurden die wäßrige Phase (W) und die Monomerphase (M) über eine Meß- und Regelapparatur in stets konstantem Verhältnis eingefahren. Die mittlere Verweilzeit je Kessel betrug 30 Minuten. Die Aktivatorphase A wurde im 2. Reaktor (1. Polymerisationskessel) zudosiert. Die Polymerisation erfolgte in Gegenwart von Luft. Die Zahlenangaben sind Gew.-Teile pro Zeiteinheit. Die tatsächlichen Mengen ergeben sich aus der Rezeptur, den Dichten der einzelnen Phasen, dem Reaktorvolumen, der geflutet gefahren wurde und der mittleren Verweilzeit.

(M) = Monomerphase:

Chloropren 100,0
n-Dodecylmercaptan 0,13
Phenothiazin 0,015

(W) = wäßrige Phase:

Entsalztes Wasser 140,0
Natriumsalz einer disproportionierten Abietinsäure 6,0
Natriumsalz eines Kondensationsproduktes aus Naphthalinsulfonsäure und Formaldehyd 0,7
Ätznatron 0,63

(A) = Aktivatorphase:

1 Gew.-% wäßrige Natrium-Dithionitlösung 0,032
Kaliumperoxodisulfat 0,070

Bei einer Innentemperatur von 11°C sprang die Reaktion im 1. Reaktionskessel an. Durch eine Außenkühlung wurde die freiwerdende Polymerisationswärme abgeführt und die Polymerisationstemperatur auf 10°C erniedrigt. Entsprechend dem Zulauf in den ersten Kessel durchläuft das Reaktionsgemisch die Rührkesselkaskade. Bei einem unter diesen Bedingungen erreichbaren Monomerumsatz von 52 % wurde die Reaktion durch Zugabe von Diethylhydroxylamin abgebrochen. Das restliche Monomere wurde durch Wasserdampfdestillation aus dem Polymeren entfernt und der Polymerlatex nach Senken des pH-Wertes auf 6,5 auf einer Kühlwalze ausgefroren und isoliert. Die Mooney-Viskosität ML-4 des Polymeren lag bei 88 ME.

2. Vergleichsbeispiel

Es wurde wie im 1. Vergleichsbeispiel polymerisiert, jedoch mit einer höheren Konzentration an Na-Dithionit, um zum gewünschten Endumsatz von 63 - 70 % zu gelangen. Es wurden daher in den 1. Polymerisationskessel bei gleichem Peroxidzusatz 0,064 Gew.-Teile Na-Dithionit zudosiert. Bei einem Monomerumsatz von 67 % wurde die Polymerisation abgebrochen und aufgearbeitet. Man erhielt ein Polymer mit einer Viskosität von 94 ME.

Beispiel 1

Man verfuhr wie im 2. Vergleichsbeispiel, ersetzte jedoch die Aktivierung im 1. Polymerisationskessel durch eine gestaffelte Aktivierung in allen 5 Polymerisationskesseln, wobei im letzten Reaktionsgefäß nur eine Na-Dithionitlösung eindosiert wurde. Die Verteilung der Aktivatorlösungen auf die Polymerisationskessel wurde wie folgt vorgenommen.

| Polym.-Kessel | 1 | 2 | 3 | 4 | 5 | |
|---|---|---|---|---|---|---|
| K-Peroxodisulfat (%) | 89,5 | 5,3 | 4,8 | 0,4 | 0 | } der Gesamtmenge |
| Na-Dithionit (%) | 69,6 | 4,1 | 3,8 | 0,3 | 22,2 | |

Wie man aus diesem Beispiel entnehmen kann, erfolgt durch das erfindungsgemäße Verfahren eine deutlich gleichmäßigere Polymerisation in den Reaktionsgefäßen (vgl. Tab. 1).

Bei einem Monomerumsatz von 66 % wurde die Polymerisation abgebrochen und aufgearbeitet. Man erhielt ein Polymer mit einer Viskosität von 93 ME.

Chloropren-Polymere, die so hergestellt worden sind, besitzen gegenüber den nach dem Stand der Technik hergestellten Produkten ein deutlich besseres Eigenschaftsniveau, das beispielhaft an der Lagerstabilität gezeigt werden soll.

Beispiel 2 (Lagerungsstabilität)

Die Streichfähigkeit und Verarbeitbarkeit von Polychloropren-Klebstofflösungen, besonders mit maschinellen Einrichtungen, sind von der Klebstoffviskosität in hohem Maße abhängig. Die Viskosität eines Klebstoffes muß daher während seiner Lagerung weitgehend konstant bleiben, um eine gleichbleibende Verarbeitbarkeit und Festigkeit der Klebung sicherzustellen. Als Prüfverfahren hierfür eignet sich die Bestimmung der Viskositätsstabilität der Klebstofflösung.

A. Herstellung der Klebstofflösung:

In einer 250 g Weithalsflasche mit Schraubverschluß wurden 33 g Polymer in 117 g eines Lösungsmittelgemisches, bestehend aus Ethylacetat/Benzin mit den Siedegrenzen 65/95°C und Toluol im Gewichtsverhältnis 2:2:1, unter Rühren gelöst. Dazu wurde das Polymere in Stücke von ~5 mm Durchmesser geschnitten. Das Lösen erfolgte unter Verschluß (durchbohrter Schraubdeckel) innerhalb von 16 h bei 300 Upm.

Tabelle 1: Abhängigkeit des Monomerumsatzes von der Art der Aktivierung

| Polymerisa-tions-Kessel | 1.Vergleichsbeispiel Aktivator PS (Gew.-%) | Na-D | Monomer-Umsatz (%) | 2.Vergleichsbeispiel Aktivator PS (Gew.-%) | Na-D | Monomer-Umsatz (%) | Beispiel 1 Aktivator PS (Gew.-%) | Na-D | Monomer-Umsatz (%) |
|---|---|---|---|---|---|---|---|---|---|
| 1 | 0,070 | 0,032 | 23 | 0,070 | 0,064 | 35 | 0,063 | 0,044 | 15 |
| 2 | - | - | 33 | - | - | 51 | 0,0037 | 0,0026 | 34 |
| 3 | - | - | 40 | - | - | 58 | 0,0034 | 0,0024 | 52 |
| 4 | - | - | 49,5 | - | - | 63 | 0,0003 | 0,0002 | 60 |
| 5 | - | - | 52 | - | - | 67 | 0 | 0,014 | 66 |

PS = K-Peroxodisulfat
Na-D = Natriumdithionit

EP 0 234 426 B1

B. Messung der Viskosität von Klebstoffen mit dem Rotationsviskosimeter nach Brookfield:
Nach dem Lösen wurde durch weitere Zugabe des verwendeten Lösungsmittelgemisches bei 23°C mit dem Brookfield-Viskosimeter LVT eine Viskosität von 10 Pa.S eingestellt. Bei den Messungen wurde DIN 53 019, Entwurf Januar 1979, zugrunde gelegt.

Die Bestimmung der Viskoelastizität der Lösung nach der Methode B erfolgt nach Lagerzeiten von 0, 14 Tagen, 1, 3 und 6 Monaten bei 23°C Lagertemperatur (Tab.2).

Die Meßwerte sollen möglichst konstant bleiben. Starke Abweichungen nach beiden Seiten sind nicht erwünscht.

**Tabelle 2**

| Polymer aus        | 1.Vergleichs-<br>beispiel | 2.Vergleichs-<br>beispiel | Beispiel 1 |
|--------------------|---------------------------|---------------------------|------------|
| Viskosität (Pas)   |                           |                           |            |
| 0 Tage             | 10                        | 10                        | 10         |
| 14 Tage            | 12                        | 12                        | 10         |
| 1 Monat            | 15                        | 14                        | 10         |
| 3 Monate           | 18                        | 16                        | 9,5        |
| 6 Monate           | 26                        | 21                        | 9,5        |

## Patentansprüche

1. Verfahren zur Herstellung von Chloroprenpolymerisaten durch wäßrige Emulsionspolymerisation von mit Phenothiazinverbindungen stabilisiertem Chloropren oder einem Gemisch aus Chloropren und bis zu 20 Gew.-% eines oder mehrerer mit Chloropren copolymerisierbarer Monomere unter Verwendung a) eines Polymerisationsinitiators, bestehend aus einer Mischung von Natriumdithionit mit Formamidinsulfinsäure oder mit Kaliumperoxodisulfat oder mit Formamidinsulfinsäure und Kaliumperoxodisulfat oder mit Kaliumperoxodisulfat und Natriumanthrachinon-β-sulfonat oder mit Formamidinsulfinsäure und Kaliumperoxodisulfat und Natriumanthrachinon-β-sulfonat in Gegenwart von Sauerstoff und b) eines Reglers, dadurch gekennzeichnet, daß die Reglermenge 0,3 bis 5 mMol je 100 g Monomer beträgt und daß zu Polymerisationsbeginn 30 bis 90% der Initiatoren vorliegen und der Rest während der Polymerisation portionsweise zugegeben wird, wobei bei einem Umsatz > 60% nur noch Natriumdithionit zugesetzt wird.

2. Verfahren nach Anspruch 1, dadurch gekennzeichnet, daß auf die zu polymerisierenden Monomeren 0,01 bis 0,3 Gew.-% Natriumdithionit eingesetzt werden.

3. Verfahren nach Anspruch 1, dadurch gekennzeichnet, daß die Polymerisation bei 0 bis 70°C durchgeführt wird.

4. Verfahren nach Anspruch 1, dadurch gekennzeichnet, daß als Comonomere 2,3-Dichlorbutadien und Schwefel verwendet werden.

5. Verfahren nach Anspruch 1, dadurch gekennzeichnet, daß es kontinuierlich durchgeführt wird.

## Claims

1. Process for the preparation of chloroprene polymers by aqueous emulsion polymerization of phenothiazine compound-stabilized chloroprene or a mixture of chloroprene and up to 20% by weight of one or more monomers which can be copolymerized with chloroprene, using a) a polymerization initiator comprising a mixture of sodium dithionite with formamidinesulphinic acid or with potassium peroxodisulphate or with formamidinesulphinic acid and potassium peroxodisulphate or with potassium peroxodisulphate and sodium anthraquinone-β-sulphinate or with formamidinesulphinic acid and potassium peroxodisulphate and sodium anthraquinone-β-sulphinate, in the presence of oxygen, and b) a regulator, characterized in that the amount of regulator is 0.3 to 5 mmol per 100 g of monomer and in that 30 to 90% of the initiators are present at the commencement of polymerization and the remainder is added in portions during the polymerization, only further sodium dithionite being added at a conversion > 60%.

2. Process according to Claim 1, characterized in that 0.01 to 0.3% by weight of sodium dithionite is employed relative to the monomers to be polymerized.

3. Process according to Claim 1, characterized in that the polymerization is carried out at 0 to 70°C.

4. Process according to Claim 1, characterized in that 2,3-dichlorobutadiene and sulphur are used as comonomers.

5. Process according to Claim 1, characterized in that it is carried out continuously.

**Revendications**

1. Procédé de production de polymérisats de chloroprène par polymérisation en émulsion aqueuse de chloroprène stabilisé par des composés de phénothiazine ou d'un mélange de chloroprène et de jusqu'à 20% en poids d'un ou plusieurs monomères copolymérisables avec le chloroprène en utilisant a) un initiateur de polymérisation constitué d'un mélange de dithionite de sodium avec de l'acide formamidinosulfinique ou avec du peroxodisulfate de potassium ou avec de l'acide formamidinosulfinique et du peroxodisulfate de potassium ou avec du peroxodisulfate de potassium et de l'anthraquinone-β-sulfonate de sodium ou avec de l'acide formamidinosulfinique et du peroxodisulfate de potassium et de l'anthraquinone-β-sulfonate de sodium en présence d'oxygène et b) un régulateur, caractérisé en ce que la quantité de régulateur est de 0,3 à 5 mmoles pour 100 g de monomère et en ce qu'il y a au début de la polymérisation 30 à 90% d'initiateurs dont le reste est ajouté par portions pendant la polymérisation, du dithionite de sodium étant seul ajouté lorsque le degré de réaction dépasse 60%.

2. Procédé suivant la revendication 1, caractérisé en ce qu'on utilise 0,01 à 0,3% en poids de dithionite de sodium par rapport aux monomères à polymériser.

3. Procédé suivant la revendication 1, caractérisé en ce que la polymérisation est conduite à 0–70°C.

4. Procédé suivant la revendication 1, caractérisé en ce qu'on utilise comme comonomères du 2,3-dichlorobutadiène et du soufre.

5. Procédé suivant la revendication 1, caractérisé en ce qu'il est mis en œuvre en continu.